# EUROPÄISCHE PATENTSCHRIFT

(11) **EP 2 071 201 B1**
(45) Veröffentlichungstag und Bekanntmachung des Hinweises auf die Patenterteilung: **24.03.2010**
(21) Anmeldenummer: 07291494.8
(22) Anmeldetag: 11.12.2007
(51) Int. Cl.: F16B 31/02, H01R 4/30

(54) **Abscherschraube**
Shear screw
Vis à cisaillement

(43) Veröffentlichungstag der Anmeldung: 17.06.2009
(73) Patentinhaber: Nexans, 75008 Paris (FR)
(72) Erfinder: Stauch, Gert, Dr.-Ing., 95032 Hof (DE); Markgraf, Volker, 95195 Röslau (DE); Bachmann, Rainer, 95152 Selbitz/Rodesgrün (DE); Grötsch, Peter, 95111 Rehau (DE)
(74) Vertreter: Döring, Roger

(56) Entgegenhaltungen:
- EP-A- 0 692 643
- EP-B- 0 750 723
- DE-A1- 19 960 198
- US-A1- 2007 253 792

## Beschreibung

Die Erfindung bezieht sich auf eine Abscherschraube zum Befestigen eines elektrischen Leiters in einer als Rohrstück ausgeführten metallischen Klemme, welche in ihrer Wandung mindestens ein mit einem Gewinde versehenes Durchgangsloch zur Aufnahme der Abscherschraube aufweist, die in zwei axial voneinander getrennten Ebenen Sollbruchstellen hat, eine erste Sollbruchstelle und eine zweite Sollbruchstelle, und die zentral ein sich über eine wesentliche Länge erstreckendes Sackloch mit einem Querschnitt aufweist, der zur Übertragung eines Drehmoments auf die Abscherschraube mittels eines in das Sackloch einsteckbaren, stiftartigen Werkzeugs geeignet ist, dessen Querschnitt dem Querschnitt des Sacklochs und dessen Außenabmessungen den lichten Abmessungen desselben entsprechen (EP 0 750 723 B1).

Unter einer zur Übertragung eines Drehmoments geeigneten Querschnittsform von Sackloch und Werkzeug ist insbesondere ein polygonaler Querschnitt zu verstehen, mit Vorteil ein Sechseck. Ebenfalls geeignete Querschnittsformen sind Sterne, die auch abgerundete Spitzen und Ecken haben können, oder auch in der Abscherschraube angebrachte einfache Schlitze und Kreuzschlitze mit entsprechendem, als Flachprofile und Kreuz geformtem Werkzeug. Stellvertretend für alle möglichen Querschnittsformen wird im folgenden der polygonale Querschnitt berücksichtigt.

Eine derartige Abscherschraube - im folgenden kurz "Schraube" genannt - wird beispielsweise in der Starkstromtechnik zum Verbinden der Leiter zweier Starkstromkabel eingesetzt. Zur Erzielung und Aufrechterhaltung eines elektrisch gut leitenden Kontakts, ist eine feste Verbindung zwischen den Leitern zweier Kabel und einer rohrförmigen metallischen Klemme erforderlich, in welche die Leiter eingesteckt sind. Das könnte durch Verwendung eines sogenannten Drehmomentschlüssels sichergestellt werden, der beim Anziehen der Schraube dann "durchdreht", wenn ein ausreichender Festsitz derselben erreicht ist. So ein Drehmomentschlüssel steht aber auf einer Baustelle oft nicht zur Verfügung. Die Schraube wird daher in der Regel mit einem anderen Werkzeug festgedreht, beispielsweise mit einem einfachen Schraubenschlüssel. Um sicherzustellen und auch um überprüfen zu können, daß die Schraube ausreichend fest angezogen ist, wird der obere Teil der Schraube dann abgeschert, wenn die Festigkeit ihrer Sollbruchstelle erreicht ist bzw. überschritten wird. Der dann fehlende Schraubenkopf ist ein Indiz dafür, daß die Schraube ausreichend fest angezogen ist. Die Schraube ragt nach dem Abscheren des Schraubenkopfes nicht oder nur unwesentlich aus der Klemme heraus. Ein über derselben zu montierendes Isolierelement wird daher weder mechanisch beschädigt, noch in seinen Isoliereigenschaften beeinträchtigt.

Die bekannte Schraube nach der eingangs erwähnten EP 0 750 723 B1 hat mehrere, axial beabstandete Sollbruchstellen. Sie wird in Abhängigkeit von ihrer Eindringtiefe in einen als metallisches Rohrstück ausgeführten Kabelstecker, die von den Abmessungen eines festzulegenden Leiters abhängt, an einer der Sollbruchstellen abgeschert. Ein zunächst ganz in ein Sackloch der Schraube eingesteckter Stift eines Werkzeugs wird dazu durch einen Schraubvorgang mittels eines äußeren, glockenartigen Stützmittels, das Teil des Werkzeugs ist und am Kabelstecker anliegt, nach und nach relativ zu der Schraube aus derselben herausbewegt. Abgeschert wird die Schraube an einer Sollbruchstelle, die etwa in Höhe der Stirnfläche des Stifts des Werkzeugs in der Position liegt, in welcher der Schraubvorgang beendet ist. Das Werkzeug ist insgesamt aufwendig.

Der Erfindung liegt die Aufgabe zugrunde, die eingangs geschilderte Schraube so zu gestalten, daß sie auf einfachere Art und Weise zur festen Anlage an einem Leiter gebracht werden kann.

Diese Aufgabe wird gemäß der Erfindung dadurch gelöst,
- daß das Sackloch sich bis etwa in die Höhe der zweiten Sollbruchstelle erstreckt, welche im unteren, der Stirnseite der Schraube zugewandten Bereich derselben angeordnet ist und eine gegenüber der ersten Sollbruchstelle größere Festigkeit hat,
- daß in der Schraube konzentrisch zu dem Sackloch eine gegenüber diesem axial kürzere Ausnehmung mit einem mit dem Querschnitt des Sacklochs identischen Querschnitt angebracht ist, welche die gleiche lichte Weite wie das Sackloch hat und um einen vorzugsweise zwischen 10° und 40° liegenden Winkel in Umfangsrichtung gegenüber demselben verschoben ist, und welche sich bis etwa in Höhe der ersten Sollbruchstelle erstreckt, die im oberen, dem Kopf der Schraube zugewandten Bereich derselben angeordnet ist, und
- daß die Öffnung des Sacklochs am Kopf der Schraube derart deformiert ist, daß das Werkzeug nur in die kürzere Ausnehmung einsteckbar ist.

Diese Schraube ist so gestaltet, daß sie mit einem einfachen, stiftartigen Werkzeug in der Gewindebohrung einer Klemme gedreht werden kann, bis ein zu befestigender Leiter in derselben mit ausreichendem Druck festgelegt ist. Ihre beiden Sollbruchstellen haben unterschiedliche Festigkeit, so daß die Schraube zuerst bzw. nur in einer ersten Arbeitsposition an der ersten Sollbruchstelle mit der geringeren Festigkeit abgeschert wird. In dieser ersten Arbeitsposition ist beispielsweise ein dünnerer Leiter eines Kabels in der Klemme festgelegt. Nach dem Abscheren des Kopfes der Schraube an der ersten Sollbruchstelle kann dieselbe mit dem gleichen einfachen Werkzeug wie vorher gegebenenfalls in eine zweite, beispielsweise zur Festlegung eines dickeren Leiters vorgesehene Arbeitsposition gebracht werden, in welcher sie an der zweiten Sollbruchstelle abgeschert wird. Dieser einfache Vorgang wird durch das Sackloch einerseits und die gegenüber diesem verdrehte Ausnehmung andererseits ermöglicht. Dabei ist durch die Deformation des Sacklochs im Bereich des Kopfes der Schraube sichergestellt, daß die Schraube zuerst an der ersten Sollbruchstelle abgeschert wird, weil das Werkzeug nur in die Ausnehmung gesteckt werden kann, die nur bis zur Höhe der ersten Sollbruchstelle reicht. Danach ist das Sackloch für das Werkzeug zugänglich, so daß die Schraube zur Festlegung eines dickeren Leiters in der Klemme mit erhöhter Kraft weitergedreht werden kann, bis sie auch an der zweiten Sollbruchstelle abgeschert wird.

Ausführungsbeispiele des Erfindungsgegenstandes sind in den Zeichnungen dargestellt.

Es zeigen:
Fig. 1 einen Längsschnitt durch eine Schraube nach der Erfindung.
Fig. 2 eine Draufsicht auf den Kopf einer Schraube nach Fig. 1.
Fig. 3 eine Einzelheit aus Fig. 2 in vergrößerter Darstellung.
Fig. 4 einen Längsschnitt durch eine gegenüber Fig. 1 abgewandelten Ausführungsform der Schraube.
Fig. 5 bis 13 unterschiedliche Positionen der Schraube in einer Klemme.

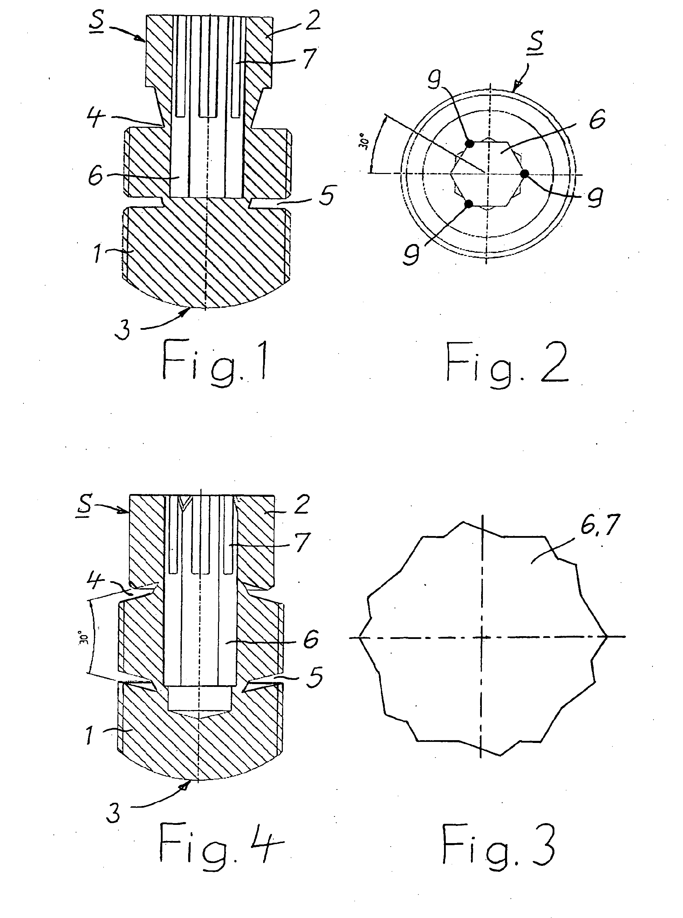

Die in Fig. 1 im Längsschnitt dargestellte Abscherschraube S - im folgenden weiter als "Schraube S" bezeichnet - hat einen Gewindeteil 1 und einen Kopf 2, der im dargestellten Ausführungsbeispiel kleinere radiale Abmessungen als der Gewindeteil 1 hat und ohne Außengewinde ausgeführt ist. Der Gewindeteil 1 endet an der Stirnseite 3 der Schraube S. Der Übergang vom Kopf 2 zum Gewindeteil 1 ist umlaufend konisch verjüngt. Die Stelle mit dem kleinsten Durchmesser bildet eine erste Sollbruchstelle 4 der Schraube S. Im Gewindeteil 1 ist außerdem eine umlaufende, spaltartige Vertiefung angebracht, welche eine zweite Sollbruchstelle 5 der Schraube S bildet. Die Festigkeit der zweiten Sollbruchstelle 5 ist größer als die der ersten Sollbruchstelle. Die beiden Sollbruchstellen 4 und 5 verlaufen in der Ausführungsform der Schraube S nach Fig. 1 rechtwinklig zur Achse der Schraube S und parallel zueinander.

Zentrisch ist in der Schraube S ein Sackloch 6 mit einem polygonalen Querschnitt angebracht, das sich von der Stirnfläche des Kopfes 2 bis in Höhe der zweiten Sollbruchstelle 5 erstreckt. Das Sackloch 6 hat vorzugsweise einen sechseckigen Querschnitt, so wie es in den Fig. 2 und 3 gezeigt ist. Es kann aber auch einen anderen polygonalen Querschnitt haben. Konzentrisch zum Sackloch 6 ist in der Schraube S eine im Querschnitt ebenfalls polygonale Ausnehmung 7 angebracht, die axial kürzer als das Sackloch 6 ist und bis in Höhe der ersten Sollbruchstelle 4 reicht. Die Ausnehmung 7 hat den gleichen Querschnitt und die gleichen lichten Abmessungen wie das Sackloch 6. Sie ist also ebenfalls mit Vorteil sechseckig ausgeführt. Die Ausnehmurig 7 ist gegenüber dem Sackloch 6 in Umfangsrichtung versetzt, beispielsweise um einen Winkel von 30°, so wie es in Fig. 2 eingezeichnet ist. Dieser Winkel soll vorzugsweise zwischen 10° und 40° liegen, und zwar mit Vorteil bei 20°.

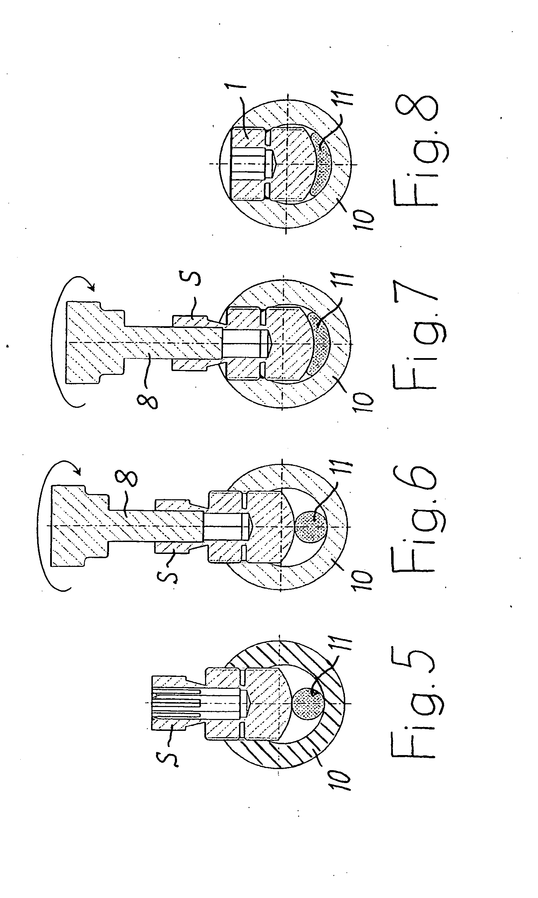

Das Sackloch 6 ist an seinem Eingang in die Schraube S, also an der Stirnfläche des Kopfes 2, so deformiert, daß ein beispielsweise in Fig. 6 eingezeichnetes stiftartiges Werkzeug 8 nicht in dasselbe eingesteckt werden kann. Das Werkzeug 8 dient zum Drehen der Schraube S. Es hat einen polygonalen Querschnitt, der dem Querschnitt von Sackloch 6 und Ausnehmung 7 entspricht. Seine Außenabmessungen entsprechen den lichten Abmessungen von Sackloch 6 und Ausnehmung 7. Das Sackloch 6 hat als Deformation gemäß Fig. 2 beispielsweise an drei Stellen 9 kleine Vorsprünge, die in sein Profil hineinragen und als Stopper für das Werkzeug 8 dienen. Grundsätzlich reicht ein solcher Stopper an nur einer Stelle 9 aus. Die Ausnehmung 7 ist in der Stirnfläche am Kopf 2 der Schraube im Querschnitt unverändert, so daß das Werkzeug 8 ungehindert in dieselbe eingesteckt werden kann.

Die Handhabung der Schraube S nach der Erfindung wird im folgenden anhand der Fig. 5 bis 13 beispielsweise erläutert:

In einer als metallisches Rohrstück ausgeführten Klemme 10 soll ein elektrischer Leiter 11 mit relativ kleinen Abmessungen mit vorgegebenem Druck festgelegt werden. Dazu wird die Schraube S in eine Gewindebohrung der Klemme 10 eingeschraubt, bis sie gemäß Fig. 5 an dem vorher in dieselbe eingesteckten,Leiter 11 anliegt. Das kann bereits unter Einsatz des Werkzeugs 8 jedoch auch von Hand ausgeführt werden.

Das Werkzeug 8 ist in der Position nach Fig. 6 in die Ausnehmung 7 eingesetzt. Seine Stirnfläche liegt dann in Höhe der ersten Sollbruchstelle 4. Durch Drehung des Werkzeugs 8 um die Achse der Schraube S wird dieselbe weiter in die Klemme 10 hineingeschraubt, wodurch der Leiter 10 zusammengedrückt wird. In der in Fig. 7 dargestellten Position der Schraube S ist der Leiter 10 mit ausreichendem Druck belastet. Bei einer weiteren Drehung des Werkzeugs 8 wird dann der Kopf 2 der Schraube S abgeschert. Es verbleibt gemäß Fig. 8 der Gewindeteil 1 in der Klemme 10, ohne Überstand

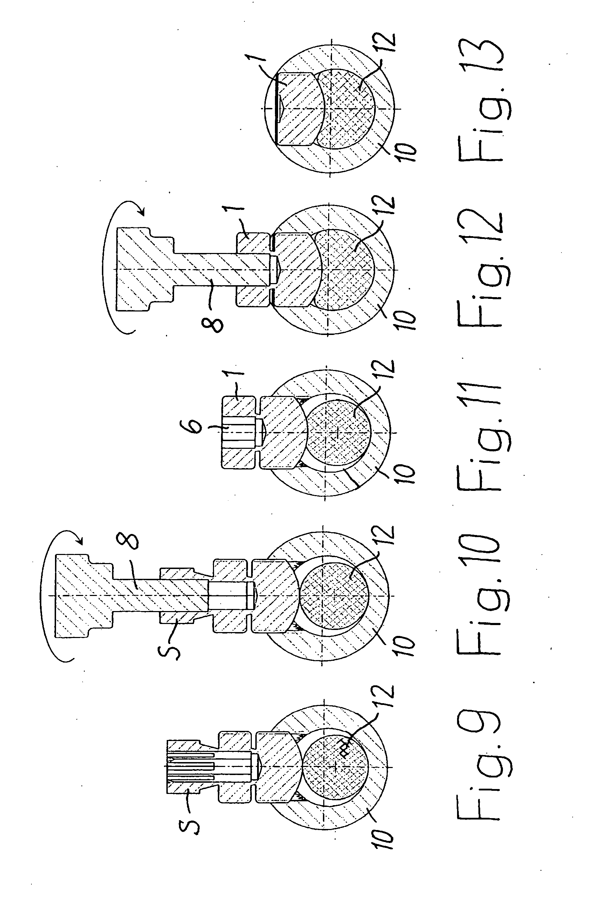

Der gleiche Ablauf gilt zunächst auch für die Festlegung eines dickeren Leiters 12 in der Klemme 10. Die Schraube S wird gemäß Fig. 9 zunächst wieder bis zur Anlage am Leiter 12 in die Klemme 10 eingeschraubt und dann mittels des Werkzeugs 8 weitergedreht (Fig. 10), wodurch der Leiter 12 deformiert wird. Die Gegenkraft des Leiters 12 wird dann so hoch, daß der Kopf 2 der Schraube S an der schwächeren ersten Sollbruchstelle 4 abgeschert wird, bevor ein ausreichend hoher Druck auf den Leiter 12 ausgeübt wird. Diese Position des verbleibenden Gewindeteils 1 der Schraube S ist in Fig. 11 dargestellt.

Das Werkzeug 8 wird jetzt in den im Gewindeteil 1 vorhandenen Teil des Sacklochs 6 eingesteckt. Der Gewindeteil 1 der Schraube S wird dann solange weitergedreht, bis der auf den Leiter 12 auszuübende Druck erreicht ist (Fig. 12). Der obere Teil des Gewindeteils 1 der Schraube S wird dann an der zweiten Sollbruchstelle 5 abgeschert. Der untere Teil des Gewindeteils 1 verbleibt gemäß Fig. 13 in der Klemme 10, wieder ohne Überstand.

Zum Verbinden der Leiter zweier Starkstromkabel wird in üblicher Technik am anderen Ende der Klemme 10 der abisolierte Leiter eines zweiten Kabels in analoger Weise mittels einer Schraube S festgelegt. Abschließend kann um die Klemme 10 ein Isolierelement herumgeformt werden.

Die Sollbruchstellen 4 und 5 der Schraube S verlaufen gemäß der Ausführungsform derselben nach Fig. 1 rechtwinklig zur Achse der Schraube S und parallel zueinander. Sie können gemäß Fig. 4 auch schräg zur Achse der Schraube S verlaufen, und zwar vorzugsweise mit entgegengesetzter Richtung der Schrägen. Deren Richtungen schließen dann einen spitzen Winkel von beispielsweise 30° miteinander ein. Bei dieser Ausführungsform der Schraube S endet die Sollbruchstelle 5 näher an der Stirnseite 3 derselben, so daß das Sackloch 6 gegenüber der Ausführungsform nach Fig. 1 verlängert werden kann. Das Werkzeug 8 kann dadurch tiefer in die Schraube S eingesteckt werden und es kann ein entsprechend größeres Moment auf die Sollbruchstelle 5 übertragen werden.

## Patentansprüche

1. Abscherschraube zum Befestigen eines elektrischen Leiters in einer als Rohrstück ausgeführten metallischen Klemme, welche in ihrer Wandung mindestens ein mit einem Gewinde versehenes Durchgangsloch zur Aufnahme der Abscherschraube aufweist, die in zwei axial voneinander getrennten Ebenen Sollbruchstellen hat, eine erste Sollbruchstelle und eine zweite Sollbruchstelle, und die zentral ein sich über eine wesentliche Länge erstreckendes Sackloch mit einem Querschnitt aufweist, der zur Übertragung eines Drehmoments auf die Abscherschraube mittels eines in das Sackloch einsteckbaren, stiftartigen Werkzeugs geeignet ist, dessen Querschnitt dem Querschnitt des Sacklochs und dessen Außenabmessungen den lichten Abmessungen desselben entsprechen, **dadurch gekennzeichnet,**
- **daß** das Sackloch (6) sich bis etwa in die Höhe der zweiten Sollbruchstelle (5) erstreckt, welche im unteren, der Stirnseite (3) der Abscherschraube (S) zugewandten Bereich derselben angeordnet ist und eine gegenüber der ersten Sollbruchstelle (4) größere Festigkeit hat,
- **daß** in der Abscherschraube (S) konzentrisch zu dem Sackloch (6) eine gegenüber diesem axial kürzere Ausnehmung (7) mit einem mit dem Querschnitt des Sacklochs (6) identischen Querschnitt angebracht ist, welche die gleiche lichte Weite wie das Sackloch (6) hat und um einen vorzugsweise zwischen 10° und 40° liegenden Winkel in Umfangsrichtung gegenüber demselben verschoben ist, und welche sich bis etwa in Höhe der ersten Sollbruchstelle (4) erstreckt, die im oberen, dem Kopf (2) der Abscherschraube (S) zugewandten Bereich derselben angeordnet ist, und
- **daß** die Öffnung des Sacklochs (6) am Kopf (2) der Abscherschraube (S) derart deformiert ist, daß das Werkzeug (8) nur in die kürzere Ausnehmung (7) einsteckbar ist.

2. Abscherschraube nach Anspruch 1, **dadurch gekennzeichnet, daß** Sackloch (6), und Ausnehmung (7) einen polygonalen Querschnitt haben.

3. Abscherschraube nach Anspruch 2, **dadurch gekennzeichnet, daß** der Querschnitt von Sackloch (6) und Ausnehmung (7) ein Sechseck ist.

4. Abscherschraube nach einem der Ansprüche 1 bis 3, **dadurch gekennzeichnet, daß** die Sollbruchstellen (4,5) im rechten Winkel zur Achse der Abscherschraube (S) und parallel zueinander verlaufen.

5. Abscherschraube nach einem der Ansprüche 1 bis 3, **dadurch gekennzeichnet, daß** die Sollbruchstellen (4,5) schräg zur Achse der Abscherschraube (S) verlaufen.

6. Abscherschraube nach Anspruch 5, **dadurch gekennzeichnet, daß** die Sollbruchstellen (4,5) unter Einschluß eines spitzen Winkels entgegengesetzt zueinander gerichtet verlaufen.

## Claims

1. Shear-off screw for the fastening of an electrical conductor within a tube like metallic clamp which has in its wall at least one threaded hole for recepting the shear-offscrew (S), which hastwo shearlevels separated from each other in axial direction, a first she arlevel (4) and a second shear level (5), and a central blind hole (6) which extends on an essentiallength of the shear screw (S) and has a cross-section which allows for the transmission of a torsional moment to the shear screw (S) by use of pin like tool, having a cross-section and outerdimensions which correspond with the cross-section and the inside dimensions of the blind hole (6), **characterized in**
- **that** the blind hole (6) ends in the area of the second revel(5), which is positioned nearto the interface (3) of the she arscrew (S) and has a higher stiffness tha n the first she arlevel (4),
- **that** the she arscrew (S) also has a recess(7) which is processed concentrically to the blind hole (6), is shorter than the blind hole (6), has the same cross-section and dimension as the same and is displaced in circumferential direction relative to the blind hole (6) about an angle of preferably between 10° and 40° and it ends in the are a of the first she arlevel(4) which is positioned nearto the head (2) ofthe she arscrew (S), and
- **that** the blind hole (6) is deformed at its entrance at the head (2) of the shear screw (S) such that the pin like to olonly can be inserted into the recess (7).

2. Shear-off screw according to claim 1, **characterized in that** blind hole (6) and recess (7) have a polygonal cross section.

3. Shear-off screw according to claim 2, **characterized in that the** cross section of blind hole (6) and recess(7) is a hexagon.

4. Shear-off screw according to one ofthe claims 1 to 3, **charcterized in that** the she arlevels (4,5) run at right angles to the axis of the shear-offscrew (S) and parallel to one another.

5. Shear-offscrew according to one ofthe claims 1 to 3, **characterized in that** the she arlevels (4,5) run obliquely to the axis of the shear-offscrew (S).

6. Shear-offscrew according to claim 5, **characterized in that** the she arlevels (4,5) run to ward sone another in opposite directions so asto form an acute angle.

## Revendications

1. Vis à cisaillement pour fixer un conducteur électrique dans une borne métallique réalisée sous forme de pièce tubulaire, qui présente, dans sa paroi, au moins un trou traversant pourvu d'un filetage pour recevoir la vis à cisaillement, laquelle présente, dans deux plans séparés axialement l'un de l'autre, des points destinés à la rupture, un premier point destiné à la rupture et un deuxième point destiné à la rupture, et qui présente, centralement, un trou borgne s'étendant sur une grande longueur, ayant une section transversale qui est appropriée pour le transfert d'un couple à la vis à cisaillement au moyen d'un outil de type broche pouvant être enfiché dans le trou borgne, dont la section transversale correspond à la section transversale du trou borgne et dont les dimensions extérieures correspondent aux dimensions intérieures de celui-ci, **caractérisée en ce que**
- le trou borgne (6) s'étendant jusqu'environ à la hauteur du deuxième point destiné à la rupture (5), qui est disposé dans la région inférieure de la vis à cisaillement (S) tournée vers son côté frontal (3) et qui présente une plus grande solidité que le premier point destiné à la rupture (4),
- un évidement (7) est pratiqué dans la vis à cisaillement (S), concentrique au trou borgne (6) et plus court axialement que celui-ci, et ayant une section transversale identique à la section transversale du trou borgne (6), lequel présente la même largeur intérieure que le trou borgne (6) et est déplacé d'un angle de préférence compris entre 10° et 40° dans la direction périphérique par rapport à celui-ci, et qui s'étend approximativement jusqu'environ à la hauteur du premier point destiné à la rupture (4) qui est disposé dans la région supérieure de la vis à cisaillement (S) tournée vers sa tête (2), et
- l'ouverture du trou borgne (6) au niveau de la tête (2) de la vis à cisaillement (S) est déformée de telle sorte que l'outil (8) ne puisse être enfoncé que dans l'évidement plus court (7).

2. Vis à cisaillement selon la revendication 1, **caractérisée en ce que** le trou borgne (6) et l'évidement (7) ont une section transversale polygonale.

3. Vis à cisaillement selon la revendication 2, **caractérisée en ce que** la section transversale du trou borgne (6) et de l'évidement (7) est un hexagone.

4. Vis à cisaillement selon l'une quelconque des revendications 1 à 3, **caractérisée en ce que** les points destinés à la rupture (4, 5) s'étendent suivant un angle droit par rapport à l'axe de la vis à cisaillement (S) et parallèlement l'un à l'autre.

5. Vis à cisaillement selon l'une quelconque des revendications 1 à 3, **caractérisée en ce que** les points destinés à la rupture (4, 5) s'étendent obliquement par rapport à l'axe de la vis à cisaillement (S).

6. Vis à cisaillement selon la revendication 5, **caractérisée en ce que** les points destinés à la rupture (4, 5) s'étendent en direction opposée l'un à l'autre suivant un angle aigu.
